# FASCICULE DE BREVET EUROPEEN

(11) **EP 3 328 637 B1**
(45) Date de publication et mention de la délivrance du brevet: **08.05.2019**
(21) Numéro de dépôt: 16750986.8
(22) Date de dépôt: 22.07.2016
(51) Int. Cl.: B32B 7/00, B32B 7/12, B32B 21/04, B32B 21/13, B32B 21/14, B32B 3/14, B32B 3/18

(54) **PANNEAU DE BOIS MULTICOUCHE ET PROCEDE DE DECOUPE ET D'ASSEMBLAGE D'AVIVES DE BOIS A L'ETAT VERT POUR LA FABRICATION D'UN TEL PANNEAU**
MEHRSCHICHTIGE HOLZPLATTE UND VERFAHREN ZUM SCHNEIDEN UND ZUSAMMENSETZEN VON KANTGRÜNHOLZ ZUR HERSTELLUNG SOLCH EINER PLATTE
MULTILAYER WOOD PANEL AND METHOD FOR CUTTING AND ASSEMBLING SQUARED GREEN WOOD FOR PRODUCING SUCH A PANEL

(30) Priorité: 31.07.2015 FR 1557385
(43) Date de publication de la demande: 06.06.2018
(73) Titulaire: Université de Bordeaux, 33000 Bordeaux (FR); Institut Polytechnique de Bordeaux, 33402 Talence Cedex (FR); Centre National de la Recherche Scientifique, 75794 Paris Cedex 16 (FR); Beynel, 33770 Salles (FR)
(72) Inventeur: POMMIER, Régis, 33370 Pompignac (FR); GARBAY, Guillaume, 33170 Gradignan (FR); MINDEGUIA, Jean-Christophe, 33270 Floirac (FR)
(74) Mandataire: A.P.I. Conseil
(86) Numéro de dépôt international: PCT/FR2016/051926
(87) Numéro de publication internationale: WO 2017/021619

(56) Documents cités:
- WO-A1-2007/149051
- WO-A2-2013/033736
- DE-U1-202006 013 553
- DE-U1-202011 108 054
- FR-A1- 2 842 818
- US-A- 3 977 449
- DATABASE WPI Week 201352 Thomson Scientific, London, GB; AN 2013-K56375 XP002763079, & CN 202 809 488 U (UNIV CHANGAN) 20 mars 2013 (2013-03-20)
- DATABASE WPI Week 199420 Thomson Scientific, London, GB; AN 1994-163460 XP002758926, & JP H06 106502 A (OKURA IND CO LTD) 19 avril 1994 (1994-04-19)

## Description

L'invention concerne le domaine des panneaux de bois, et plus particulièrement les panneaux composites à au moins trois couches de bois, encore dénommés panneaux lamellés collés ou lamellés croisés, utilisés notamment en construction pour réaliser des murs ou des panneaux de plancher par exemple. Ces panneaux peuvent aussi intégrer d'autres couches de matériau pour assurer d'autres fonctions et être utilisés dans des domaines d'application autres, tels que, par exemple, l'isolation.

L'invention concerne tout type de collage quelle que soit l'humidité du bois. Cependant, l'intérêt est particulièrement pertinent pour un collage à l'état vert. Plus particulièrement, l'invention concerne un panneau de bois multicouche, réalisé à partir d'avivés de bois découpés et assemblés à l'état vert, ainsi qu'un procédé de découpe et d'assemblage d'avivés de bois à l'état vert, pour la fabrication d'un tel panneau multicouche.

### [Art antérieur]

Dans la suite de la description, on entend par « panneau composite » ou « panneau multicouche », un panneau comprenant plusieurs couches de bois, disposées selon une orientation particulière les unes par rapport aux autres. Parmi les panneaux composites, on trouve plus particulièrement les panneaux lamellés collés et les panneaux lamellés croisés.

Les panneaux lamellés collés sont plus particulièrement des produits obtenus par collage de plusieurs lamelles de bois dont le fil est parallèle. Les produits lamellés collés sont généralement utilisés pour la fabrication de poutres.

Les panneaux lamellés croisés, encore dénommés panneaux CLT (de l'acronyme anglais « Cross Laminated Timber ») par exemple, sont des produits lamellés croisés de lamelles de bois massif et /ou abouté. Ces panneaux consistent en un minimum de trois couches d'avivés de bois reliées par collage. Ces couches sont plus particulièrement assemblées de telle manière que le fil du bois d'une couche est orienté perpendiculairement au fil du bois de la couche adjacente. La section transversale d'un panneau composite de bois lamellé croisé comprend donc au moins trois couches orthogonales les unes par rapport aux autres. Un panneau CLT comprend généralement entre 3 et 7 couches d'avivés, mais ce nombre n'est pas limitatif. Le document DE 20 2006 013 553 U1 décrit un panneau de type.

Pour fabriquer ces panneaux composites, des avivés de bois verts sont en général sciés dans une grume de bois, puis séchés naturellement ou non avant d'être collés entre eux. Une grume de bois est généralement sciée à l'état vert ou ressuyé. Les sciages permettent en général d'obtenir des avivés de forme parallélépipède rectangle.

Les avivés subissent ensuite des déformations au moment de leur séchage du fait des retraits engendrés par la perte d'eau. Le séchage traditionnel d'un avivé avant collage, engendre des déformations par l'effet de retraits préférentiels entre le sens radial, tangentiel et longitudinal du bois. Plus particulièrement, les déformations se produisent au niveau de la section du bois, avec un retrait tangentiel deux fois plus important qu'un retrait radial, entrainant un tuilage de l'avivé. Les déformations qui se produisent selon l'axe longitudinal sont généralement liées à la pente de fil, c'est-à-dire à l'angle formé par le sens du fil du bois et l'axe de sciage. La présence éventuelle de noeuds peut en outre perturber la pente de fil et accentuer la déformation longitudinale. L'avivé se voile, et il en résulte une déformation complexe que l'on appelle aussi gauchissement, flèches de rives ou de face, difficilement maitrisable.

Les déformations induites par le séchage sur deux pièces à coller, font que l'épaisseur du joint de colle est irrégulière et que la mise sous pression de la surface de collage induit l'apparition de contraintes internes dans le bois, d'autant plus fortes que les déformations sont importantes.

En conséquence, lors du collage traditionnel à plat de bois sec, il est nécessaire de raboter les avivés de bois sec voir de les dégauchir avant de les encoller. Le dégauchissage permet d'obtenir la surface plane de référence dans le sens longitudinal. Le rabotage permet d'assurer le parallélisme de la section des avivés. Sans l'opération de rabotage voire de dégauchissage, il est nécessaire d'appliquer une très forte pression de collage, par rapport à la section des avivés, pour pouvoir rattraper ces défauts de voilement et gauchissement et assurer un collage continu sur toute la surface à coller.

Pour la fabrication de panneaux composites, tels que les panneaux en lamellé croisé (CLT) par exemple, la surface à encoller est telle que les forces nécessaires pour compenser ces défauts géométriques rendent la technologie difficile et longue à mettre en oeuvre. La pression à appliquer sur la surface à encoller doit en effet être limitée et il est en général nécessaire de multiplier les opérations de rabotage et dégauchissage pour pouvoir assembler les différents avivés par collage. Or, ces opérations représentent une consommation d'énergie contribuant également à l'augmentation des coûts de production et induisent des pertes en rendement de matière par rapport à l'avivé de départ. Par ailleurs, afin de limiter les déformations et donc de réduire les pertes en rendement de matière, on utilise en général des bois de qualité supérieure, dont le fil est suffisamment droit pour limiter le phénomène de gauchissement apparaissant au moment du séchage. Cependant, de tels bois contribuent également à augmenter le coût de production des panneaux. Toutes ces contraintes engendrent un surcoût significatif et font du panneau CLT un produit relativement onéreux par rapport à un mur en ossature bois classique ou à un mur béton préfabriqué.

Pour éviter les déformations liées aux retraits préférentiels lors du séchage du bois, préalablement à l'encollage, une formulation de composition adhésive a été réalisée en vue de pouvoir coller du bois à l'état vert, directement après sciage. Cette formulation est décrite dans la demande de brevet FR2 842 818. Grâce à cette composition adhésive, il est possible de coller des avivés de bois à l'état vert, sans opérations de dégauchissage préalable et avec un très faible rabotage, voire aucun. Le collage du bois vert permet en outre de travailler sur un bois plus souple que le même bois à l'état sec. En conséquence, une plus faible pression permet de corriger les éventuels défauts géométriques pour jointer intimement les deux avivés à coller.

Le séchage a postériori d'un panneau composite, par exemple un panneau lamellé croisé CLT, fabriqué à partir d'avivés collés à l'état vert, peut alors se faire naturellement, par séchage convectif, par séchage à basse température, ou par séchage sous vide, ou par tout autre moyen. Cependant, il a été constaté que dans le cas d'un tel panneau, la surface de collage entre les couches étant très importante par rapport à celle d'un avivé, l'étape de séchage postérieure au collage engendre des contraintes internes importantes provoquant des décollements prématurés voire spontanés du joint de collage entre les différentes couches d'avivés. Un tel panneau ne peut donc pas être fabriqué par collage d'avivés à l'état verts, avec des avivés quelconques.

Dans la perspective de fabriquer des panneaux composites, de type CLT par exemple, le demandeur a donc cherché une solution pour abaisser les coûts de fabrication de ces panneaux, et pour obtenir des panneaux durables et stables mécaniquement.

### [Problème techniquel

L'invention a donc pour but de remédier aux inconvénients de l'art antérieur. En particulier, l'invention a pour but de proposer un panneau comprenant plusieurs couches d'avivés de bois découpés et assemblés à l'état vert, préalablement à leur séchage, ledit panneau ne présentant pas de défaut structurel nuisible, suite à son séchage.

L'invention a en outre pour but de proposer un procédé de découpe et d'assemblage d'avivés de bois à l'état vert pour la fabrication d'un panneau multicouche, ledit procédé étant simple et facile à mettre en oeuvre, avec un nombre réduit d'étapes, et permettant de maitriser les déformations du bois collé à l'état vert au moment de son séchage.

### [Brève description de l'invention]

A cet effet, l'invention porte sur un panneau de bois comprenant plusieurs couches d'avivés découpés et assemblés à l'état vert, préalablement à leur séchage final, ledit panneau étant caractérisé en ce que c'est un panneau lamellé croisé, dont les couches successives d'avivés présentent un fil de bois orienté alternativement à 90°, en ce que chaque couche d'avivés présente une surface principale de collage dans un plan de référence du bois longitudinal - radial, et en ce les cernes d'accroissement, visibles sur la section de chaque avivé constitutif de chaque couche, sont orientés selon un angle compris entre 45 et 135°, bornes comprises, avec ladite surface principale de collage.

Ainsi, l'orientation particulière des cernes d'accroissement par rapport à la surface principale de collage, dans le plan de référence longitudinal - radial, permet, lors du séchage final ultérieur du panneau, de ne pas induire de déformations ou de contraintes nuisant à la pérennité du collage entre les couches du panneau, ni à la performance d'ensemble du panneau assemblé. Les retraits préférentiels ne provoquent aucun défaut structurel à l'échelle du panneau. Au contraire, cette structure liée à l'orientation des cernes par rapport à la surface principale de collage permet de libérer certaines contraintes de retrait, engendrées par le séchage, sur le joint de collage qui les bloque alors. Le panneau multicouche ainsi fabriqué est donc très stable mécaniquement.

Selon d'autres caractéristiques optionnelles du panneau :
- le panneau comprend au moins trois couches formant deux couches externes collées de part et d'autre d'une couche d'âme, les cernes d'accroissement, sur les sections des avivés constitutifs de ladite couche d'âme, sont sensiblement perpendiculaires aux surfaces principales de collage de ladite couche d'âme, tandis que les cernes d'accroissement, sur les sections des avivés constitutifs desdites couches externes, sont orientés sensiblement à 45° ou à 135°, par rapport à la surface principale de collage de chacune desdites couches externes.

L'invention porte en outre sur un procédé de découpe et d'assemblage d'avivés de bois à l'état vert pour la fabrication d'un panneau multicouche lamellé croisé tel que décrit ci-dessus, ledit procédé étant caractérisé en ce qu'il comprend au moins les étapes suivantes :
1) découpe de planches de bois issues d'une ou plusieurs grume(s), en avivés, chaque avivé présentant une section dans un plan de référence du bois radial-tangentiel laissant apparaitre des cernes d'accroissement, les avivés obtenus à l'issue de l'étape 1) de découpe, sont disposés alignés et empilés,
2) retournement d'au moins un empilement d'avivés issus de chaque planche pour former une ou plusieurs couches de constitution dudit panneau, ledit retournement étant effectué de sorte que les avivés successifs d'une même ligne présentent un fil de bois orienté alternativement à 90°, pour former les différentes couches dudit panneau et que les cernes d'accroissement, visibles sur les sections des avivés, sont orientés selon un angle compris entre 45° et 135°, bornes comprises, avec une surface principale de collage de ladite (desdites) couche(s), ladite surface principale de collage étant dans un plan de référence du bois longitudinal-radial,
3) collage des couches de constitution du panneau, obtenues à l'issue de l'étape 2, par leur surface principale de collage.

Selon d'autres caractéristiques optionnelles du procédé :
- les planches de bois sont issues d'un sciage de plusieurs grumes sur dosse, contre-dosse, fausse-dosse et/ou faux-quartier,
- le panneau multicouche comprend une couche d'âme au centre et, de part et d'autre, au moins deux couches externes, les cernes d'accroissement des sections des avivés constitutifs de la couche d'âme, étant sensiblement perpendiculaires aux surfaces principales de collage de ladite couche d'âme, tandis que l'axe tangentiel aux cernes d'accroissement des sections des avivés constitutifs des couches externes, sont orientés à 45° ou à 135°, par rapport à la surface principale de collage de chaque couche externe,
- le collage est effectué par pression et sous vide,
- préalablement à l'étape 1) de découpe, les planches de bois sont empilées et collées pour former un produit lamellé collé et, à l'issue de l'étape 1) de découpe, on obtient des couches d'avivés, au moins une desdites couches étant retournée conformément à l'étape 2, de sorte que les cernes d'accroissement, visibles sur les sections des avivés, sont orientés selon un angle compris entre 45° et 135°, bornes comprises, avec la surface principale de collage desdites couches, et que les couches d'avivés successives présentent un fil de bois orienté alternativement à 90°.

Le panneau multicouche lamellé croisé peut en outre être obtenu selon un procédé de découpe et d'assemblage d'avivés de bois à l'état vert comprenant les étapes suivantes :
1) aligner et empiler des planches de bois issues d'un sciage de plusieurs grumes sur quartier,
2) retourner au moins un empilement de planches de sorte que les planches successives d'une même ligne présentent un fil de bois orienté alternativement à 90°, pour former les différentes couches dudit panneau et de sorte que les cernes d'accroissement, visibles sur les sections des planches, sont orientés selon un angle de l'ordre de 90° avec une surface principale de collage desdites couches, ladite surface principale de collage étant dans un plan de référence du bois longitudinal-radial,
3) collage des couches de constitution du panneau, obtenues à l'issue de l'étape 2, par leur surface principale de collage.

D'autres avantages et caractéristiques de l'invention apparaitront à la lecture de la description suivante donnée à titre d'exemple illustratif et non limitatif, en référence aux Figures annexées qui représentent :
- la Figure 1, un schéma des plans de référence du bois dans une portion de grume,
- les Figures 2A à 2C, respectivement la section d'une planche de bois issue du sciage d'une grume sur dosse, contre-dosse, fausse-dosse, ou faux quartier, ladite planche étant découpée en avivés, et les avivés de cette même planche après retournement selon deux variantes de réalisation,
- les Figure 3A à 3C, un panneau lamellé croisé, obtenu selon le premier mode de réalisation, respectivement vu de face, selon une coupe longitudinale A-A, et selon une coupe transversale B-B,
- les Figures 4A à 4C, un autre panneau lamellé croisé, obtenu selon un autre mode de réalisation, respectivement vu de face, selon une coupe longitudinale A-A, et selon une coupe transversale B-B,
- la Figure 5, une vue en coupe transversale d'un panneau lamellé croisé selon l'invention, après séchage,
- la Figure 6, un schéma en perspective d'un exemple non limitatif de produit lamellé collé traditionnel avant découpe pour fabrication d'un panneau lamellé croisé selon l'invention.

### [Description de l'invention]

Dans la suite de la description, on entend par « grume » un tronc ébranché et écimé.

Lorsque l'on parle de « sciage d'une grume », dans la description, il s'agit en général d'un sciage sur un morceau de grume, que l'on appelle aussi « billon ».

On entend par « avivé », une pièce de bois parallélépipédique de section carrée ou rectangulaire. Un tel avivé peut présenter des défauts géométriques, tels que des flacheux par exemple.

On entend par « cernes d'accroissement », les cernes concentriques visibles sur la section d'une grume et caractéristiques de la croissance du tissu ligneux.

On entend par « axe longitudinal » d'une grume, l'axe central passant par le coeur de la grume, sur toute la longueur de la grume.

On entend par « axe radial » d'une grume, l'axe passant du coeur vers l'écorce de la grume, c'est - à - dire parallèle au rayon de la section de la grume.

On entend par « axe tangentiel », un axe tangent à l'écorce de la grume et/ou à un cerne d'accroissement.

On entend par plan longitudinal - radial (LR), le plan formé par les axes respectivement longitudinal et radial.

On entend par plan longitudinal-tangentiel (LT) le plan formé par les axes respectivement longitudinal et tangentiel.

On entend par plan radial-tangentiel (RT), le plan formé par les axes respectivement radial et tangentiel.

Les définitions ci-dessus, relatives aux axes et aux plans, ont par exemple été décrites en pages 5 et 6 de la thèse intitulée «« comportement hydromécanique d'assemblages bois collés à l'état vert » soutenue par Boris Clouet, le 26 mai 2014 et disponible sur le site Internet suivant : https://tel.archives-ouvertes.fr/tel-01127351/.

On entend par « séchage final », un séchage permettant l'obtention d'un bois dont le taux d'humidité est acceptable pour être commercialisé selon les classes d'emploi définies dans les normes NF EN 335-1 et 2 et NF EN 460. Une ou plusieurs étapes de séchage intermédiaires peuvent éventuellement être mises en oeuvre préalablement à l'assemblage des avivés.

On entend par « planche de bois », une planche de section parallélépipède-rectangle issue d'un plan de sciage d'une grume. Une telle planche peut être issue d'une dosse lorsqu'elle est débitée au début ou à la fin du sciage de la grume, d'une contre-dosse lorsqu'elle est débitée dans la partie la plus tangentielle de la grume après la dosse, d'un quartier lorsqu'elle est débitée selon le diamètre de la grume. La planche peut aussi être débitée entre le quartier et la contre-dosse, dans des parties que l'on nomme les faux quartiers et les fausses dosses.

Dans la suite de la description, les mêmes références sont utilisées pour désigner les mêmes éléments.

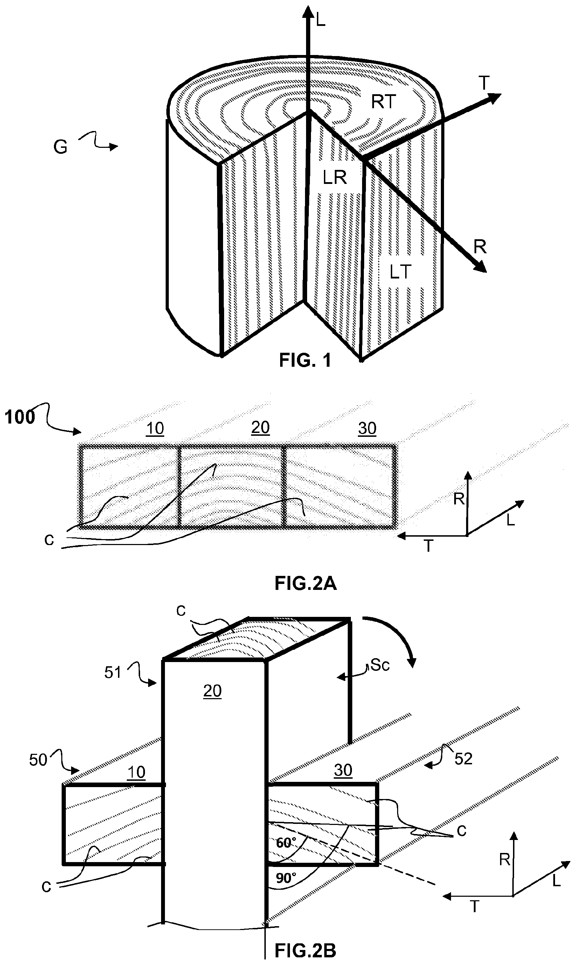

La Figure 1 schématise une portion de grume G et représente les axes, respectivement radial R, longitudinal L et tangentiel T de cette grume G ainsi que les trois plans de référence du bois, respectivement longitudinal - radial LR, radial - tangentiel RT, et longitudinal - tangentiel LT. Les retraits du bois au moment du séchage sont limités dans le sens longitudinal L. Les retraits dans le sens tangentiel T, c'est - à - dire notamment pour les planches débitées sur dosse, sont deux fois plus important que les retraits dans le sens radial R, c'est-à-dire notamment pour les planches débitées sur quartier. Par conséquent, le plan longitudinal-radial LR apparait comme étant le plan le plus stable des trois plans.

De manière avantageuse, les surfaces de collage principales des différentes couches d'un panneau composite, de type panneau CLT par exemple, sont définies comme étant des surfaces comprises dans le plan de référence longitudinal-radial LR du bois.

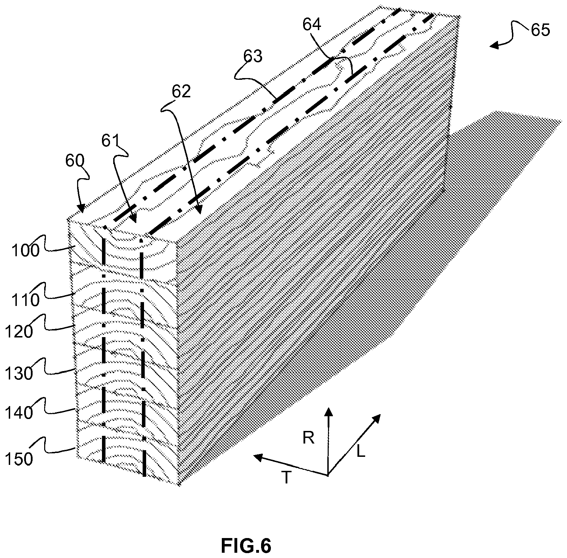

Une étape préalable au procédé de découpe et d'assemblage selon l'invention consiste à scier une ou plusieurs grume(s) de manière à obtenir des planches de bois, référencées 100, 110, 120, 130, 140, 150, sur les Figures 2A et 6.

Selon un premier mode de réalisation, une première étape du procédé de découpe et d'assemblage selon l'invention consiste à découper les planches de bois issues d'une ou plusieurs grume(s) en avivés, référencés 10, 11, 12, 13, 14, 15, ... ; 20, 21, 22, 23... ; 30, 31, 32, 33, 34... sur les Figures 2A à 5, de sorte que chaque avivé présente une section dans un plan de référence du bois radial-tangentiel RT, laissant apparaitre des cernes d'accroissement.

Les avivés obtenus à l'issue de cette découpe sont ensuite disposés alignés et empilés, dans des dispositifs automatiques de triage par exemple. Au moins un empilement d'avivés est alors retourné, de sorte que chaque empilement d'avivés forme une couche de constitution du panneau, le fil du bois de chaque couche étant orienté alternativement à 90°, et de sorte que l'axe tangentiel aux cernes d'accroissement, visibles sur les sections des avivés, forme un angle compris entre 45° et 135°, bornes comprises, avec la surface principale de collage des couches qui se situe dans le plan de référence du bois longitudinal- radial (LR).

Il est connu de l'homme du métier que lors de la découpe d'une grume sur quartier, la grande face de la planche découpée, dans le plan LR, est perpendiculaire aux cernes d'accroissement, tandis que lors d'une découpe sur dosse, la face la plus importante de la planche découpée est tangente aux cernes d'accroissement. On retrouve par exemple cette description en page 13 de la thèse intitulée « une modélisation de la résistance en flexion du pin maritime utilisé en construction » soutenue par Cécile Grazide le 2 décembre 2014 et disponible sur le site Internet suivant: https://tel.archives-ouvertes.fr/tel-01176734/. De plus, la distance entre l'avivé prélevé, par rapport au coeur d'une grume, détermine de façon fiable les angles que font les axes tangentiels aux cernes avec les différents plans de l'avivé.

Par conséquent, selon que la planche de la Figure 2A est découpée sur dosse, contre-dosse, fausse-dosse ou faux-quartier, la face la plus importante de la planche est donc sensiblement tangente aux cernes d'accroissement.

La planche 100 est découpée en avivés dont les sections présentent des dimensions suffisamment petites pour conserver une orientation optimum des cernes d'accroissement par rapport à la surface de collage Sc. Ainsi, sur les Figures 2A et 2B, les cernes d'accroissement de chaque avivé 10, 20, 30 sont orientés selon une même direction et présentent un rayon de courbure suffisamment faible pour que l'homme du métier puisse déterminer l'angle moyen que fait la direction tangentielle aux cernes avec la surface principale de collage Sc.

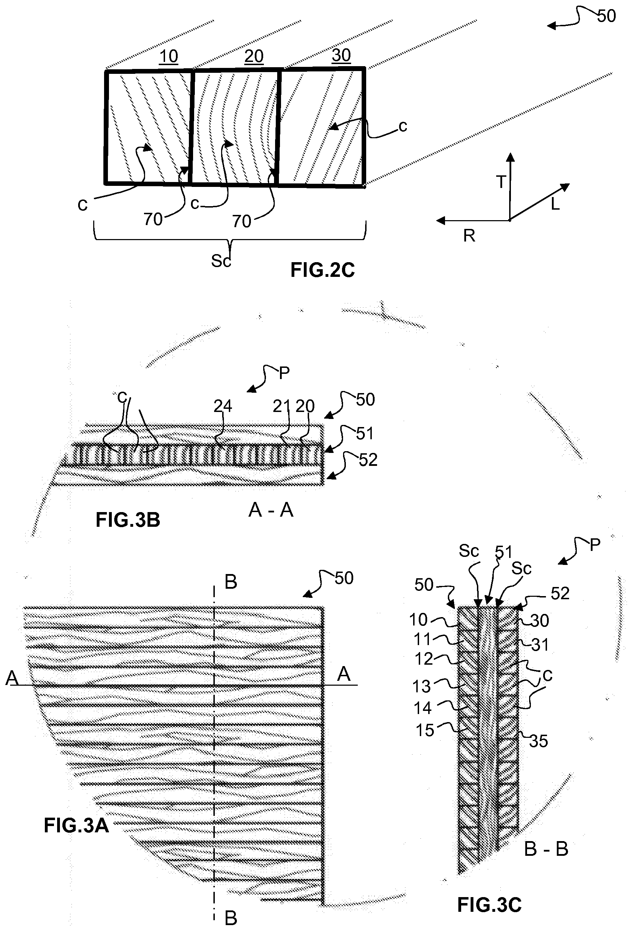

Une variante, permettant de réaliser un panneau lamellé collé ou lamellé croisé, consiste à aligner les avivés obtenus à l'issue de la découpe des planches, puis à retourner les avivés de manière à permettre leur assemblage par leurs rives, dans le plan longitudinal - tangentiel LT, pour former une couche de constitution du panneau, tel qu'illustré sur la Figure 2C. Cette étape doit alors être répétée autant de fois qu'il y a de couches dans le panneau. Les couches ainsi formées sont ensuite collées entre-elle par leurs surfaces principales de collage dans le plan longitudinal - radial LR, et de sorte que l'axe tangentiel aux cernes d'accroissement, visibles sur les sections des avivés, forme un angle compris entre 45° et 135°, bornes comprises, avec la surface principale de collage des couches. Lorsque le panneau composite multicouche est un panneau lamellé croisé CLT, les couches d'avivés successives, constitutives du panneau, sont orientées perpendiculairement les unes par rapport aux autres, de sorte que le fil du bois, dans le plan LR de la surface principale de collage, de chaque couche adjacente soit perpendiculaire.

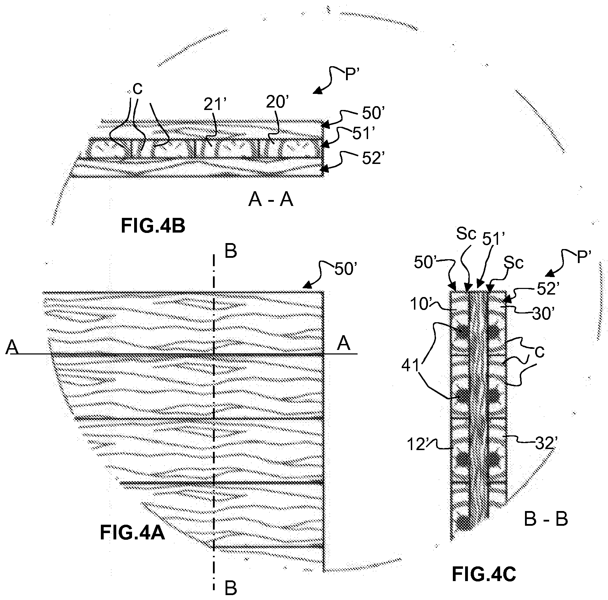

Les différentes couches de constitution d'un panneau multicouches, formées à partir d'une pluralité d'avivés sont référencées 50, 51, 52 et 50', 51' et 52' sur les Figures 3A à 3C et 4A à 4C.

Le collage des couches est de préférence effectué par pression sous vide. La pression exercée est beaucoup moins élevée que dans les procédés traditionnels du fait que les avivés de bois sont encore à l'état vert.

De manière avantageuse, l'angle formé entre l'axe tangentiel aux cernes d'accroissement et la surface principale de collage est compris entre 45° et 135° bornes comprises. Un tel angle permet de réduire significativement les contraintes internes apparaissant dans le bois au moment du séchage. Dans un cas idéal, pour qu'aucune contrainte interne n'apparaisse dans le bois, cet angle est sensiblement de 90° dans les couches d'âme et sensiblement de 45 ou de 135° dans les couches externes, encore dénommées parements. Les retraits dans le sens radial, engendrés lors du séchage, sont alors empêchés par les surfaces principales de collage, et n'induisent pas ou peu d'endommagement au niveau de l'assemblage. La contrainte maximale à la traction, perpendiculaire aux cernes d'accroissement, est significativement plus faible que la résistance mécanique du joint collé. Dans un cas idéal, pour limiter les défauts potentiels du panneau CLT, c'est à dire pour que les retraits soient uniformes dans l'épaisseur du panneau par exemple, cet angle est de 90°. En ce qui concerne les couches externes, ou parements, un angle de 45° ou de 135° par rapport à la surface principale de collage Sc du panneau, permet de diriger les endommagements vers le coeur du panneau afin qu'aucune gerce ni fente n'apparaisse sur la surface du panneau.

Selon les deux modes de réalisation du procédé de fabrication du panneau, les avivés peuvent être découpés dans des planches débitées sur dosse, contre-dosse, fausse-dosse, faux quartier ou bien quartier.

Selon un premier mode de réalisation, illustré sur les schémas des Figures 2A à 3C, les planches de bois sont débitées sur dosse, contre-dosse, fausse-dosse ou faux quartier, selon la section des grumes.

La Figure 2A schématise une telle planche de bois 100. Cette planche 100, de section rectangulaire, dans le plan radial-tangentiel (RT), présente une surface principale dans le plan LT et des cernes d'accroissement c, visibles sur la section, sensiblement parallèles à cette surface principale dans le plan LT. Cette planche 100 est découpée en une pluralité d'avivés référencés 10, 20, 30 sur la Figure 2A.

La réalisation d'un panneau multicouche est schématisée sur la Figure 2B qui représente les avivés obtenus après découpe de la planche 100 de la Figure 2A. Pour simplifier le schéma, seule une planche 100 est représentée, mais l'homme du métier comprendra aisément qu'en alignant et en empilant les avivés obtenus après découpe d'une pluralité de planches, en les disposant par exemple dans des dispositifs automatiques de triage, il est possible de retourner au moins un empilement d'avivés à 90° en une seule étape. Pour cela, les dispositifs automatiques de triage dans lesquels sont disposés les avivés assurent le retournement d'un ou plusieurs empilements, de sorte que les avivés successifs d'une même ligne présentent un fil de bois orienté alternativement à 90° pour former les différentes couches du panneau. L'empilement d'avivés 20, 21, 22, 23..., tel que référencé sur la Figure 3C par exemple, est destiné à former la couche d'âme 51 du panneau, c'est-à-dire la couche centrale, tandis que les empilements d'avivés 10, 11, 12, ... et 20, 21, 22, ... situés de part et d'autre, sont destinés à former deux couches externes 50, 52, ou parements, du panneau. L'empilement d'avivés 20, ... est alors retourné à 90°, dans le sens de la flèche sur le schéma de la Figure 2B. Ce retournement à 90° permet d'orienter le fil du bois de chaque couche 50, 51, 52 d'avivés adjacente ainsi formée à 90°, afin d'obtenir un panneau lamellé croisé. Ce retournement permet en outre, de manière très avantageuse, d'orienter les cernes c d'accroissement, visibles sur les sections RT des avivés, de sorte que l'axe qui leur est tangent forme un angle compris entre 45° et 135°, bornes comprises, avec la surface principale de collage Sc des couches 50, 51, 52 ainsi obtenues, cette surface principale de collage étant dans le plan de référence du bois longitudinal-radial LR.

Connaissant la distance d'un avivé 10, 20, 30 découpé, par rapport au coeur de la grume d'où il provient, le rayon de courbure des cernes d'accroissement de cet avivé est connu. Par conséquent, connaissant ce rayon de courbure, l'angle entre la tangente à ce rayon de courbure et un plan, par exemple le plan LR, peut être déterminé par calcul. La mesure d'angle par rapport à la surface de collage Sc, dans le plan LR, est représentée sur la Figure 2B sur laquelle l'angle que forme l'axe tangentiel, représenté en trait pointillé, aux cernes d'accroissement de l'avivé 30 avec la surface de collage Sc, mesure 60°.

Les angles que font les axes tangentiels aux cernes d'accroissement par rapport au plan de collage peuvent être mesurés, aussi bien au moment de la découpe des avivés, que pour vérifier l'orientation des avivés avant collage du panneau, par tout moyen de mesure connu, tel que par exemple un scanner à rayons X, avec mesure de la grume et des avivés en trois dimensions, un profilomètre laser qui mesure directement sur l'avivé la pente du fil du bois et donc les orientations de cernes, une caméra simple ou à corrélation d'image, un scanner laser 3D etc...

Ce procédé de fabrication est très avantageux car très rapide et facile à mettre en oeuvre, les avivés pouvant être disposés dans des automates qui retournent automatiquement des empilements d'avivés formant les couches du panneau, de sorte que la structure d'un panneau est obtenue en une seule étape de retournement. Les couches du panneau ainsi obtenues sont collées à l'état vert en appliquant une pression sous vide.

De manière facultative, au moment de l'encollage des surfaces de collage Sc des différentes couches du panneau, il est également possible d'encoller les avivés par leurs rives. Quoiqu'il en soit, même si cet encollage par les rives n'est pas effectué, du fait de la pression sous vide appliquée, la colle appliquée sur les surfaces de collage des couches se répand dans les interstices, de sorte que les avivés sont simultanément collés entre eux par leurs rives.

Une variante de réalisation de l'étape de retournement des avivés est schématisée sur la Figure 2C. Cette variante consiste à aligner les avivés 10, 20, 30 obtenus à l'issue de l'étape de découpe des planches et à tous les retourner, de manière à ce qu'ils forment une seule couche 50. Dans ce cas, les avivés 10, 20, 30 sont retournés à 90° et assemblés entre eux par leurs rives 70, orientées dans le plan de référence du bois longitudinal - tangentiel LT, de manière à ce que la surface principale Sc devienne la surface dans le plan LR et que l'axe tangent aux cernes d'accroissement c, visibles dans chaque section d'avivé 10, 20, 30, soit compris entre 45 et 135° par rapport à ladite surface principale Sc. Pour former une couche 50 de surface suffisante pour réaliser un panneau, il faut assembler plusieurs avivés issus de plusieurs planches et positionnés de sorte que leurs rives soient disposées côte à côte. Lorsque plusieurs couches d'avivés à l'état vert sont ainsi réalisées, celles-ci sont collées entre elles pour former un panneau lamellé collé ou lamellé croisé selon que les couches adjacentes sont orientées à 90° ou non.

On préfère cependant effectuer l'étape de retournement conformément à la première variante illustrée sur le schéma de la Figure 2B plutôt que cette-dernière variante qui nécessite beaucoup plus d'étapes pour réaliser les différentes couches du panneau.

Les Figures 3A à 3C représentent plus particulièrement le panneau P lamellé croisé respectivement vu de face, selon une coupe longitudinale A-A, et selon une coupe transversale B-B, obtenu par collage des trois couches 50, 51, 52 d'avivés préalablement obtenues par retournement d'au moins un empilement d'avivés, tel que schématisé sur la Figure 2B.

Pour cela, les couches 50, 51, 52, obtenues à la suite du retournement de l'empilement central d'avivés 20, 21, 22, 23..., sont collées par leurs surfaces principales de collage Sc, dans le plan LR, le fil du bois des couches adjacentes étant orienté perpendiculairement. Ainsi, les coupes A-A ou B-B du panneau P mettent en évidence les couches 50, 51, 52 dont le fil du bois est alternativement orienté à 90°.

La Figure 3A représente le panneau P vu de face et plus particulièrement une couche externe 50, de parement, formée à partir d'un empilement d'avivés 10, 11, 12, 13,....

Lorsque les avivés sont découpés sur dosse, contre-dosse, fausse dosse ou faux quartier, la couche intermédiaire 51 du panneau P, encore dénommée « couche d'âme », est de préférence réalisée avec des avivés 20, 21, 22... dont les sections présentent des cernes d'accroissement c orientées sensiblement perpendiculairement aux surfaces principales de collages Sc situées de part et d'autre de ladite couche d'âme 51, tandis que les couches externes 50 et 52 du panneau P sont réalisées avec des avivés 10, 11, 12, ... ; 30, 31, 32... dont les sections présentent des cernes d'accroissement c formant un angle sensiblement de 45° ou de 135° par rapport à la surface de principale de collage Sc dans le plan LR. Un tel mode de réalisation préférentiel est illustré sur la Figure 2B et sur les Figure 3B et 3C qui permettent également de mettre en évidence la perpendicularité des couches adjacentes 50, 51, 52 les unes par rapport aux autres.

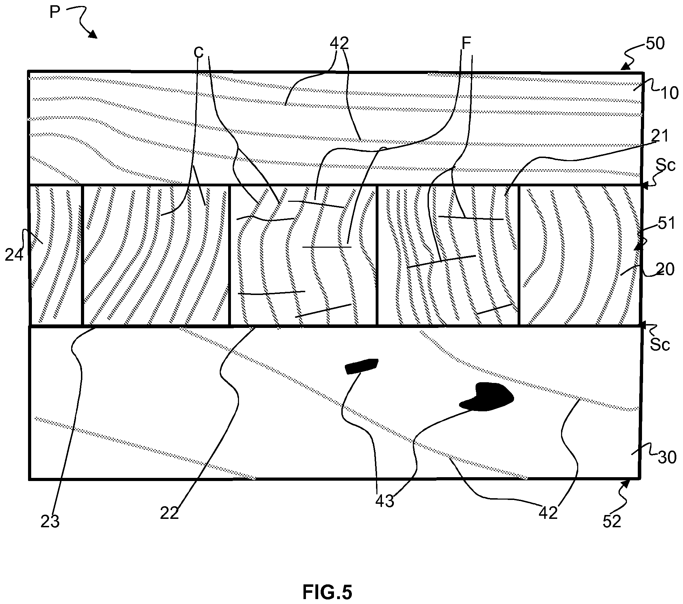

Cette orientation préférentielle des cernes d'accroissement entre les différentes couches 50, 51, 52 du panneau P lamellé croisé, permet avantageusement de diriger les endommagements vers le coeur du panneau afin qu'aucune gerce ni fente n'apparaisse sur la surface du panneau. Les fentes à coeur, référencées F sur la Figure 5 et apparaissant dans le sens radial au moment du séchage ultérieur du panneau P sont alors confinées à l'intérieur de la couche d'âme 51. Ces fentes à coeur étant perpendiculaires à l'axe principal de sollicitation du panneau lamellé croisé CLT, elles ne nuisent pas à sa tenue mécanique.

Les Figures 4A à 4C représentent un autre panneau P' lamellé croisé, obtenu selon un autre mode de réalisation, respectivement vu de face, selon une coupe longitudinale A-A, et selon une coupe transversale B-B.

Selon ce mode de réalisation, les avivés constitutifs de chaque couche 50', 51', 52' sont des planches de bois débitées sur quartiers.

Dans le cas d'une découpe sur quartier, l'axe tangentiel aux cernes d'accroissement, visibles sur la section de chaque avivé constitutif d'une couche 50', 51', 52', est perpendiculaire, ou du moins compris entre 45° et 90°, par rapport à la surface principale, selon le plan LR, de chaque planche.

Les planches sur quartier présentant une surface principale dans le plan de collage longitudinal -radial LR, l'étape de découpe en avivés n'est alors plus nécessaire, car les cernes ne sont alors pas tangentes à la surface de collage dans le plan LR, mais sensiblement perpendiculaires. Dans ce cas, on utilise directement les planches débitées sur quartier. Ces planches sont alignées, par mise en regard de leurs surfaces principales LR, et empilées. Un empilement de planches sur deux est alors retourné de manière à ce que les planches successives d'une même ligne présentent un fil de bois orienté à 90° et de sorte que l'axe tangentiel aux cernes d'accroissement (c), visibles sur les sections RT des planches, forme un angle de l'ordre de 90° avec la surface principale de collage Sc dans le plan LR.

Ce mode de réalisation à partir de planches issues de quartiers est avantageux notamment pour les feuillus, tels que le chêne par exemple, qui est un bois particulièrement dense avec un rayon ligneux très stable. Le joint de collage, sur la surface principale de collage Sc, ainsi que le panneau P' sont alors très stables. Ce mode de réalisation n'est pratiquement pas possible à mettre en oeuvre lorsque les planches sont séchées préalablement au collage car, dans ce cas, les planches s'endommagent au moment du séchage du fait du fil du bois qui est perturbé à l'approche du coeur 41 de la grume.

Un sciage de planches de bois dense comme le chêne est également possible sur dosse, mais reste cependant moins intéressant qu'un sciage sur quartier du fait de la difficulté d'usiner des bois denses.

Les avivés, ou planches, choisis pour fabriquer un panneau P, P' sont de préférence homogènes. Ainsi, les avivés, ou planches, 10, 11, 12,... ; 20, 21, 22... ; 30, 31, 32... ou 10', 11', 12' ... ; 20', 21', 22', ... ; 30', 31', 32', ...respectivement d'une même couche 50 ; 51 ; 52 ou 50' ; 51' ; 52' présentent de préférence des cernes d'accroissement c orientées dans le même sens, c'est à dire selon un angle sensiblement identique, ou du même ordre de grandeur, par rapport à la surface principale de collage Sc, afin d'avoir un retrait homogène dans le panneau au moment de son séchage. Les planches choisies pour découper les avivés doivent donc être débitées dans des parties similaires des grumes.

De manière facultative, la couche d'âme 51 ; 51' peut présenter une épaisseur différente de celle des couches externes 50, 52 ; 50', 52'.

Les sections des avivés ne doivent pas présenter des dimensions trop importantes de manière à conserver une orientation optimum des cernes d'accroissement c par rapport à la surface principale de collage principal Sc. Cependant, les sections ne doivent pas non plus, présenter des dimensions trop petites afin de ne pas augmenter de manière trop importante la fréquence des joints de colle. Il convient donc de faire un compromis sur les dimensions de la section des avivés.

De manière avantageuse, la détermination des plans de sciage des planches de bois desquelles sont issus les avivés, de la taille des sections des avivés et des orientations des cernes d'accroissement par rapport à la surface principale de collage Sc entre les différentes couches d'un panneau, permet, au moment du séchage final ultérieur du produit assemblé et collé à l'état vert, d'induire des déformations et des contraintes qui ne nuisent pas à la pérennité du collage entre les couches. Les retraits préférentiels dus au séchage ne provoquent aucun défaut structurel à l'échelle du panneau.

Selon un autre mode de réalisation d'un panneau lamellé croisé CLT, tel que schématisé sur la Figure 6, préalablement à l'étape de découpe de planches en avivés, les planches de bois, référencées 100, 110, 120, 130, 140, 150, sont empilées et collées pour former un produit 65 en lamellé collé. Le produit 65 lamellé collé, tel qu'illustré sur le schéma de la Figure 6 n'est qu'un exemple illustratif et aucunement limitatif, l'orientation des cernes des planches du produit lamellé collé n'étant aucunement limitée à ce schéma. Le produit lamellé collé est ensuite découpé longitudinalement en plusieurs tranches 60, 61, 62. Ces découpes sont schématisées par les traits 63, 64 sur la Figure 6. Chaque tranche 60, 61, 62 forme alors une couche d'avivés à coller pour former un panneau lamellé croisé. Pour cela, la couche d'avivés intermédiaire 61, destinée à former la couche d'âme du panneau lamellé croisé, est tournée à 90° par rapport aux couches externes 60, 62, afin d'avoir trois couches successives dont le fil du bois est orthogonal et dont les cernes d'accroissement forment un angle compris entre 45° et 135° par rapport à la surface principale de collage, dans le plan LR, des couches 60, 61, 62.

Selon ce mode de réalisation, il n'est pas nécessaire d'appliquer une grande pression au moment du collage des couches 60, 61, 62. Il est même possible de fixer les joints de colle par clouage des couches entre elles, sans nécessité d'appliquer une pression sous vide.

La Figure 5 schématise la section d'un panneau multicouche P lamellé croisé fabriqué selon le procédé de découpe et d'assemblage d'avivés de bois à l'état vert, après séchage ultérieur. La section de chaque couche externe 50 et 52 correspond à la rive d'un avivé 10, 30 constitutif de ladite couche, et laisse apparaitre le fil du bois 42. Des noeuds 43 peuvent également être présents dans les avivés. La couche d'âme 51 comprend des avivés 20, 21, 22, 23, 24, dont les cernes d'accroissement c sont orientées sensiblement perpendiculairement par rapport aux surfaces principales de collage Sc de la couche. Après séchage du panneau, on constate l'apparition de fentes, référencées F, encore dénommées fentes à coeur. Ces fentes apparaissent lors du séchage et sont orientées dans le sens radial, c'est-à-dire perpendiculairement aux cernes d'accroissement.

Avec une orientation des cernes d'accroissement c préférentiellement à 45° ou 135° sur les couches externes 50, 52 et à 90° sur la couche d'âme 51, les fissurations tangentielles sont concentrées au coeur du panneau de bois et les fentes à coeur liées au séchage et perpendiculaires aux cernes d'accroissement c sont essentiellement confinées dans la couche d'âme 51 du panneau et non dans les couches externes, ce qui permet l'obtention d'un panneau esthétique.

Le procédé de découpe et d'assemblage d'avivés de bois à l'état vert, et les panneaux lamellés croisés selon l'invention ont été décrit pour des panneaux à trois couches. Cependant, on comprendra facilement que le procédé peut s'appliquer à des panneaux de plus de trois couches. Dans ce cas, l'étape de retournement consiste à retourner un empilage d'avivés sur deux, de sorte que deux couches adjacentes ainsi formées présentent un fil de bois orienté perpendiculairement.

Le procédé de découpe et d'assemblage d'avivés de bois à l'état vert qui vient d'être décrit présente de nombreux avantages. Le bois à l'état vert n'étant pas déformé, le collage des avivés entre eux permet un contact intime et parfait sur toute la longueur. Le séchage final ultérieur du panneau fabriqué par ce procédé engendre des déformations liées aux retraits préférentiels qui ne nuisent pas à la structure du panneau. Les retraits étant majoritairement tangentiels, les endommagements se produisent essentiellement dans le sens radial, perpendiculairement aux cernes d'accroissement. Le joint de collage n'est donc quasiment pas sollicité.

Le séchage final ultérieur n'induit donc que peu ou pas d'endommagement, et les quelques endommagements subis n'entrainent pas la ruine du panneau lors de sa sollicitation. Au contraire, certaines contraintes de séchage sont libérées sur le joint de collage grâce à l'apparition de micros-endommagements rendus possibles par l'orientation des cernes par rapport au joint de collage. Le panneau composite obtenu est donc mécaniquement fiable car ni les plans de collage, ni le bois dans le sens longitudinal ne sont endommagés. Le panneau composite présente donc une grande stabilité dimensionnelle, une bonne durabilité, une tenue mécanique en compression, en flexion et aux chocs. La dimension de la section des avivés et l'orientation des cernes d'accroissement permet de limiter, voire même d'empêcher complètement les apparitions de contraintes internes au moment du séchage.

Du fait de tous ces avantages, il est en outre possible de réaliser des panneaux avec des bois de qualité inférieure et donc moins couteux que ceux utilisés jusqu'à présent.

Le procédé de découpe et d'assemblage est simple à mettre en oeuvre et ne nécessite aucune étape de traitement mécanique sur les avivés préalablement au collage.

Tous ces avantages contribuent donc à réduire les coûts de production de tels panneaux composites multicouche.

## Revendications

1. Panneau (P, P') de bois comprenant plusieurs couches d'avivés découpés et assemblés à l'état vert préalablement à leur séchage final, ledit panneau étant **caractérisé en ce que** c'est un panneau (P,P') lamellé croisé, dont les couches successives d'avivés (50, 51, 52 ; 50', 51', 52' ; 60, 61, 62) présentent un fil de bois orienté alternativement à 90°, **en ce que** chaque couche d'avivés (50, 51, 52 ; 50', 51', 52' ; 60, 61, 62) présente une surface principale de collage (Sc) dans un plan de référence du bois longitudinal - radial (LR), et **en ce que** les cernes d'accroissement (c), visibles sur la section de chaque avivé (10, 11, 12, 13, 14, 15... ; 20, 21, 22... ; 30, 31, 32 ... ; 10', 11', 12',... ; 20', 21', 22', ... ; 30', 31', 32' ...) constitutif de chaque couche, sont orientés selon un angle compris entre et 45 et 135°, bornes comprises, avec ladite surface principale de collage (Sc).

2. Panneau selon la revendication 1, **caractérisé en ce que** le panneau (P) comprend au moins trois couches formant deux couches externes (50, 52) collées de part et d'autre d'une couche d'âme (51), les cernes d'accroissement (c), sur les sections des avivés (20, 21, 22, 23, 24, 25, ...) constitutifs de ladite couche d'âme (51), sont sensiblement perpendiculaires aux surfaces principales de collage (Sc) de ladite couche d'âme, tandis que les cernes d'accroissement (c), sur les sections des avivés constitutifs (10, 11, 12, 13, 14, 15, ... ; 30, 31, 32, 33, ...) desdites couches externes (50, 52), sont orientés sensiblement à 45° ou à135°, par rapport à la surface principale de collage (Sc) de chacune desdites couches externes (50, 52).

3. Procédé de découpe et d'assemblage d'avivés de bois à l'état vert pour la fabrication d'un panneau (P, P') multicouche lamellé croisé selon l'une des revendications 1 à 2, ledit procédé étant **caractérisé en ce qu'**il comprend au moins les étapes suivantes :
1) découpe de planches de bois (100 ; 110, 120, 130, 140, 150) issues d'une ou plusieurs grume(s) (G), en avivés (10, 11, 12, 13, 14, 15... ; 20, 21, 22... ; 30, 31, 32 ... ; 10', 11', 12',... ; 20', 21', 22', ... ; 30', 31', 32' ...), chaque avivé présentant une section dans un plan de référence du bois radial-tangentiel (RT) laissant apparaitre des cernes (c) d'accroissement, les avivés (10, 11, 12, 13, 14, 15... ; 20, 21, 22... ; 30, 31, 32 ... ; 10', 11', 12',... ; 20', 21', 22', ... ; 30', 31', 32' ...) obtenus à l'issue de l'étape 1) de découpe, sont disposés alignés et empilés,
2) retournement d'au moins un empilement d'avivés (20, 21, 22, 23,... ; 20', 21', 22', 23', ...) issus de chaque planche pour former une ou plusieurs couches (50, 51, 52; 50', 51', 52') de constitution dudit panneau, ledit retournement étant effectué de sorte que les avivés successifs (10 ; 20 ; 30 ; 10', 20', 30') d'une même ligne présentent un fil de bois orienté alternativement à 90°, pour former les différentes couches (50, 51, 52 ; 50', 51', 52') dudit panneau (P ; P') et que les cernes d'accroissement (c), visibles sur les sections (RT) des avivés, sont orientés selon un angle compris entre 45° et 135°, bornes comprises, avec une surface principale de collage de ladite (desdites) couche(s), ladite surface principale de collage étant dans un plan de référence du bois longitudinal-radial (LR),
3) collage des couches de constitution du panneau, obtenues à l'issue de l'étape 2, par leur surface principale de collage (Sc).

4. Procédé selon la revendication 3, **caractérisé en ce que** les planches de bois sont issues d'un sciage de plusieurs grumes (G) sur dosse, contre-dosse, fausse-dosse et/ou faux-quartier.

5. Procédé selon la revendication 4, **caractérisé en ce que** le panneau multicouche (P) comprend une couche d'âme (51) au centre et, de part et d'autre, au moins deux couches externes (50, 52) et **en ce que** les cernes d'accroissement (c) des sections des avivés (20, 21, 22, 23, ...) constitutifs de la couche d'âme (51), sont sensiblement perpendiculaires aux surfaces principales de collage (Sc) de ladite couche d'âme (51), tandis que les cernes d'accroissement (c) des sections des avivés (10, 11, 12, ... ; 30, 31, 32, ...) constitutifs des couches externes (50, 52), sont orientés sensiblement à 45° ou à 135°, par rapport à la surface principale de collage (Sc) de chaque couche externe.

6. Procédé selon l'une des revendications 3 à 5, **caractérisé en ce que** le collage des couches est effectué par pression et sous vide.

7. Procédé selon la revendication 3, **caractérisé en ce que** préalablement à l'étape 1) de découpe, les planches de bois (100, 110, 120, 130, 140, 150) sont empilées et collées pour former un produit lamellé collé (65) et **en ce qu'**à l'issue de l'étape 1) de découpe, on obtient des couches (60, 61, 62) d'avivés, au moins une desdites couches étant retournée conformément à l'étape 2, de sorte que les cernes d'accroissement (c), visibles sur les sections (RT) des avivés, sont orientés selon un angle compris entre 45° et 135°, bornes comprises, avec la surface principale de collage (Sc) desdites couches, et que les couches d'avivés successives (60, 61, 62) présentent un fil de bois orienté alternativement à 90°.

8. Procédé de découpe et d'assemblage d'avivés de bois à l'état vert pour la fabrication d'un panneau (P') multicouche lamellé croisé selon l'une des revendications 1 à 2, ledit procédé étant **caractérisé en ce qu'**il comprend les étapes suivantes :
1) aligner et empiler des planches de bois issues d'un sciage de plusieurs grumes (G) sur quartier,
2) retourner au moins un empilement de planches de sorte que les planches successives d'une même ligne présentent un fil de bois orienté alternativement à 90°, pour former les différentes couches (50', 51', 52') dudit panneau (P') et de sorte que les cernes d'accroissement (c), visibles sur les sections (RT) des planches, sont orientés selon un angle de l'ordre de 90° avec une surface principale de collage (Sc) desdites couches, ladite surface principale de collage étant dans un plan de référence du bois longitudinal-radial (LR),
3) collage des couches de constitution du panneau, obtenues à l'issue de l'étape 2, par leur surface principale de collage.

## Patentansprüche

1. Holzplatte (P, P'), die mehrere Schichten Schnittholz umfasst, die vor ihrer Endtrocknung geschnitten und im grünen Zustand montiert wurden, wobei die Platte **dadurch gekennzeichnet ist, dass** es eine gekreuzt geschichtete Platte (P, P') ist, deren aufeinanderfolgende Schichten von Schnittholz (50, 51, 52; 50', 51', 52'; 60, 61, 62) eine Körnung aufweisen, die abwechselnd um 90° ausgerichtet ist, und dadurch, dass jede Schnittholzschicht (50, 51, 52; 50', 51', 52'; 60, 61, 62) eine Hauptklebefläche (Sc) in einer längsradialen Holzreferenzebene (LR) aufweist, und dass die Jahresringe (c), die auf dem Querschnitt jedes Schnittholzes (10, 11, 12, 13, 14, 15 ...; 20, 21, 22, ...; 30, 31, 32, ...; 10', 11', 12',...; 20', 21', 22', ...; 30', 31', 32', ...) jeder Schicht sichtbar sind, in einem Winkel zwischen 45 und 135° einschließlich der Anschlüsse, mit der Hauptklebefläche (Sc) ausgerichtet sind.

2. Platte nach Anspruch 1, **dadurch gekennzeichnet, dass** die Platte (P) zumindest drei Schichten umfasst, die zwei Außenschichten (50, 52) bilden, die auf beiden Seiten einer Kernschicht (51) verklebt sind, die Jahresringe (c), auf den Abschnitten des Schnittholzes (20, 21, 22, 23, 24, 25, ....), die die Kernschicht (51) bilden, im Wesentlichen senkrecht zu den Hauptklebeflächen (Sc) der Kernschicht stehen, während die Jahresringe (c) auf den Abschnitten des Schnittholzes (10, 11, 12, 13, 14, 15, ....; 30, 31, 32, 33, ...) der Außenschichten (50, 52) im Wesentlichen auf 45° oder 135° gegenüber der Hauptklebefläche (Sc) jeder der Außenschichten (50, 52) ausgerichtet sind.

3. Verfahren zum Schneiden und Montieren von Schnittholz im grünen Zustand zur Herstellung einer mehrschichtig gekreuzt geschichteten Platte (P, P') nach einem der Ansprüche 1 bis 2, **dadurch gekennzeichnet, dass** das Verfahren zumindest die folgenden Schritte umfasst:
1) Schneiden von Holzbrettern (100; 110, 120, 130, 140, 150) aus einem oder mehreren Baumstämmen (G) in Schnittholz (10, 11, 12, 13, 14, 15, ...; 20, 21, 22...; 30, 31, 32, ...; 10', 11', 12',...; 20', 21', 22', ...; 30', 31', 32', ...), wobei jedes Schnittholz einen Abschnitt in einer radial-tangentialen (RT) Holzreferenzebene aufweist, die Jahresringe (c) zeigt, wobei das Schnittholz (10, 11, 12, 13, 14, 15...; 20, 21, 22...; 30, 31, 32 ...; 10', 11', 12',...; 20', 21', 22', ...; 30', 31, 32',...) das am Ende des Schritts 1) des Schneidevorgangs erzielt wird, ausgerichtet und gestapelt angeordnet ist,
2) Umdrehen zumindest eines Schnittholzstapels (20, 21, 22, 23, ....; 20', 21', 22', 23', ...) aus jedem Brett zum Bilden einer oder mehrerer Schichten (50, 51, 52; 50', 51', 52') der Zusammensetzung der Platte, wobei das Umdrehen so durchgeführt wird, dass die aufeinanderfolgenden Schnitthölzer (10; 20; 30; 10', 20', 30') einer gleichen Linie eine Körnung aufweisen, die abwechselnd um 90° ausgerichtet ist, um die verschiedenen Schichten (50, 51, 52; 50', 51', 52') der Platte (P; P') zu bilden, und dass die Jahresringe (c), die auf den Abschnitten (RT) des Holzes sichtbar sind, in einem Winkel zwischen 45° und 135°, einschließlich der Anschlüsse, mit einer Hauptklebefläche der Schicht(en) ausgerichtet sind, wobei sich die Hauptklebefläche in einer längsradialen Holzreferenzebene (LR) befindet,
3) Kleben der am Ende von Schritt 2 erzielten Plattenaufbauschichten auf ihrer Hauptklebefläche (Sc).

4. Verfahren nach Anspruch 3, **dadurch gekennzeichnet, dass** die Holzbretter aus dem Sägen mehrerer Baumstämme (G) auf Schwarte, Brettschwarte, falsche Schwarte und/oder falsch gevierteilt hervorgehen.

5. Verfahren nach Anspruch 4, **dadurch gekennzeichnet, dass** die Mehrschichtplatte (P) eine Kernschicht (51) in der Mitte und auf beiden Seiten zumindest zwei Außenschichten (50, 52) umfasst, und dadurch, dass die Jahresringe (c) der Abschnitte der Schnitthölzer (20, 21, 22, 23, ...), die die Kernschicht (51) bilden, im Wesentlichen senkrecht zu den Hauptklebeflächen (Sc) der Kernschicht (51) stehen, während die Jahresringe (c) der Abschnitte des Schnittholzes (10, 11, 12, ...;. 30, 31, 32, ...), die die Außenschichten (50, 52) bilden, im Wesentlichen auf 45° oder 135° gegenüber der Hauptklebefläche (Sc) jeder Außenschicht ausgerichtet sind.

6. Verfahren nach einem der Ansprüche 3 bis 5, **dadurch gekennzeichnet, dass** das Verkleben der Schichten durch Druck und Vakuum erfolgt.

7. Verfahren nach Anspruch 3, **dadurch gekennzeichnet, dass** vor dem Schritt mit dem Schneiden 1) die Holzbretter (100, 110, 120, 130, 140, 150) gestapelt und verklebt werden, um ein verleimtes Schichtprodukt (65) zu bilden, und dadurch, dass am Ende des Schneideschritts 1) Schnittholzschichten (60, 61, 62) erzielt werden, wobei zumindest eine der Schichten nach Schritt 2 umgedreht wird, so dass die Jahresringe (c), die auf den Abschnitten (RT) des Schnittholzes sichtbar sind, in einem Winkel zwischen 45° und 135°, einschließlich der Anschlüsse, mit der Hauptklebefläche (Sc) der Schichten ausgerichtet sind, und dass die aufeinanderfolgenden Schichten des Holzes (60, 61, 62) eine Körnung aufweisen, die abwechselnd auf 90° ausgerichtet ist.

8. Verfahren zum Schneiden und Montieren von Schnittholz in grünem Zustand für die Herstellung einer mehrschichtig gekreuzt geschichteten Platte (P') nach einem der Ansprüche 1 bis 2, wobei das Verfahren **dadurch gekennzeichnet ist, dass** es die folgenden Schritte umfasst:
1) Ausrichten und Stapeln der Holzbretter aus dem Sägen mehrerer Baumstämme (G) auf gevierteilt,
2) Umdrehen zumindest eines Bretterstapels, so dass die aufeinanderfolgenden Bretter der gleichen Linie eine Körnung aufweisen, die abwechselnd um 90° ausgerichtet ist, um die verschiedenen Schichten (50', 51', 52') der Platte (P') zu bilden, und so dass die Jahresringe (c), die auf den Abschnitten (RT) der Bretter sichtbar sind, in einem Winkel in der Größenordnung von 90° mit einer Hauptklebefläche (Sc) der Schichten ausgerichtet sind, wobei die Hauptklebefläche sich in einer längsradialen Holzreferenzebene (LR) befindet,
3) Kleben der einzelnen Schichten der Platte, die am Ende von Schritt 2 erzielt wurden, auf ihrer Hauptklebefläche

## Claims

1. A wood panel (P, P') comprising several layers of squared wood cut out and assembled while green prior to their final drying, said panel being **characterized in that** it is a cross-laminated panel (P, P'), whose successive layers of squared wood (50, 51, 52; 50', 51', 52'; 60, 61, 62) have a wood grain oriented alternately at 90°, **in that** each layer of squared wood (50, 51, 52; 50', 51', 52'; 60, 61, 62) has a main bonding surface (Sc) in a reference plane of the longitudinal-radial (LR) wood, and **in that** the growth rings (c), visible on the section of each squared wood (10, 11, 12, 13, 14, 15, ...; 20, 21, 22, ...; 30, 31, 32, ...; 10', 11', 12', ...; 20', 21', 22', ...; 30', 31', 32', ...) constituting each layer, are oriented at an angle comprised between 45 and 135° inclusive, with said main bonding surface (Sc).

2. The panel according to claim 1, **characterized in that** the panel (P) comprises at least three layers forming two outer layers (50, 52) bonded on either side of a core layer (51), the growth rings (c), on the sections of the squared wood (20, 21, 22, 23, 24, 25, ...) constituting said core layer (51), are substantially perpendicular to the main bonding surfaces (Sc) of said core layer, while the growth rings (c), on the sections of the constituent squared wood (10, 11, 12, 13, 14, 15, ...; 30, 31, 32, 33, ...) of said outer layers (50, 52) are oriented at approximately 45° or 135°, with respect to the main bonding surface (Sc) of each of said outer layers (50, 52).

3. A method for cutting out and assembling squared wood while green for manufacturing a cross-laminated multilayer panel (P, P') according to any of claims 1 to 2, said method being **characterized in that** it comprises at least the following steps:
1) cutting out wood boards (100; 110, 120, 130, 140, 150) derived from one or more log(s) (G), into squared wood (10, 11, 12, 13, 14, 15, ...; 20, 21, 22 ...; 30, 31, 32, ...; 10', 11', 12', ...; 20', 21', 22', ...; 30', 31', 32',...), each squared wood having a section in a reference plane of the radial-tangential wood (RT) letting growth rings (c) appear, the squared wood (10, 11, 12, 13, 14, 15, ...; 20, 21, 22, ...; 30, 31, 32, ...; 10', 11', 12', ...; 20', 21', 22', ...; 30', 31', 32', ...) obtained at the end of the cutting step 1), are arranged in an aligned and stacked configuration,
2) returning at least one stack of squared woods (20, 21, 22, 23, ... ; 20', 21', 22', 23', ...) derived from each board to form one or more layer(s) (50, 51, 52; 50', 51', 52') constituting said panel, said returning being carried out so that the successive squared woods (10; 20; 30; 10', 20', 30') of a same line have a wood grain oriented alternately at 90°, to form the different layers (50, 51, 52; 50', 51', 52') of said panel (P; P') and that the growth rings (c), visible on the sections (RT) of the squared woods, are oriented at an angle comprised between 45° and 135° inclusive, with a main bonding surface of said layer(s), said main bonding surface being in a reference plane of the longitudinal-radial wood (LR),
3) bonding the layers constituting the panel, obtained at the end of step 2, by their main bonding surface (Sc).

4. The method according to claim 3, **characterized in that** the wood boards are derived from a slab, board slab, false slab and/or rift sawing of several logs (G).

5. The method according to claim 4, **characterized in that** the multilayer panel (P) comprises a core layer (51) in the center and, on both sides, at least two outer layers (50, 52) and **in that** the growth rings (c) of the sections of the squared woods (20, 21, 22, 23, ...) constituting the core layer (51) are substantially perpendicular to the main bonding surfaces (Sc) of said core layer (51), while the growth rings (c) of the sections of the squared woods (10, 11, 12, ...; 30, 31, 32, ...) constituting the outer layers (50, 52), are oriented substantially at 45° or 135°, with respect to the main bonding surface (Sc) of each outer layer.

6. The method according to any of claims 3 to 5, **characterized in that** the bonding of the layers is carried out by pressure and under vacuum.

7. The method according to claim 3, **characterized in that**, prior to the cutting step 1), the wood boards (100, 110, 120, 130, 140, 150) are stacked and bonded together to form a bonded laminated product (65) and **in that**, at the end of the cutting step 1), layers (60, 61, 62) of squared woods are obtained, at least one of said layers being returned in accordance with step 2 so that the growth rings (c), visible on the sections (RT) of the squared woods, are oriented at an angle comprised between 45° and 135° inclusive, with the main bonding surface (Sc) of said layers, and that the layers of successive squared woods (60, 61, 62) have a wood grain oriented alternately at 90°.

8. The method for cutting out and assembling squared woods while green for manufacturing a cross-laminated multilayer panel (P') according to any of claims 1 to 2, said method being **characterized in that** it comprises the following steps:
1) aligning and stacking wood boards derived from a quarter-sawing of several logs (G),
2) returning at least one stack of boards so that the successive boards of the same line have a wood grain oriented alternately at 90°, to form the different layers (50', 51', 52') of said panel (P') and so that the growth rings (c), visible on the sections (RT) of the boards, are oriented at an angle of the order of 90° with a main bonding surface (Sc) of said layers, said main bonding surface being in a reference plane of the longitudinal-radial wood (LR),
3) bonding the layers constituting the panel, obtained at the end of step 2, by their main bonding surface.
